Europäisches Patentamt

European Patent Office

Office européen des brevets

(19)

(11) Numéro de publication: **0 435 760 B1**

(12) **FASCICULE DE BREVET EUROPEEN**

(45) Date de publication de fascicule du brevet: **24.08.94**  (51) Int. Cl.5: **A01N 61/02**, A01N 47/14

(21) Numéro de dépôt: **90403720.7**

(22) Date de dépôt: **20.12.90**

(54) **Compositions fongicides à base de Mancozèbe et d'huile minérale et leur application à l'agriculture.**

(30) Priorité: **22.12.89 FR 8917132**

(43) Date de publication de la demande:
**03.07.91 Bulletin 91/27**

(45) Mention de la délivrance du brevet:
**24.08.94 Bulletin 94/34**

(84) Etats contractants désignés:
**AT CH DE ES IT LI**

(56) Documents cités:
**FR-A- 1 326 689**
**FR-A- 2 081 844**
**FR-A- 2 413 884**
**US-A- 3 558 302**

**CHEMICAL ABSTRACTS, vol. 91, no. 19, 5 novembre 1979, page 182, résumé no. 152610r, Columbus, Ohio, US; V.L. PEREZ: "Control of Mycosphaerella musicola Leach (Sigatoka) with oil and mixed fungicides in oil", & AGROTEC. CUBA 1978, 10(1), 83-94**

**CHEMICAL ABSTRACTS, vol. 87, no. 19, 7 novembre 1977, page 149, résumé no. 146951d, Columbus, Ohio, US; B.A. ESTRADA et al.: "Control of Philippine corn downy**

**mildew by mineral oils and Dithane M-45", & PHILIPP. AGRIC. 1976, 59(7-8), 256-65**

(73) Titulaire: **ELF ATOCHEM AGRI S.A.**
**1, rue des Frères Lumière**
**F-78370 Plaisir (FR)**

(72) Inventeur: **Courtade, Michel**
**32 Allée du Lac Supérieur**
**F-78110 Le Vesinet (FR)**
Inventeur: **Josselin, Pierre**
**9 rue Aldolphe Vard**
**F-27200 Vernon (FR)**
Inventeur: **Lemarchand, Michel, 6, Résidence "La Ferme du Rû"**
**Sainte-Colombe près Vernon**
**F-27950 Saint-Marcel (FR)**

(74) Mandataire: **Rinuy, Santarelli**
**14, avenue de la Grande Armée**
**F-75017 Paris (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 435 760 B1

## Description

La présente invention a pour objet de nouvelles formulations de produits phytosanitaires, utilisés en agriculture pour la protection des plantes.

Pour protéger leurs récoltes et maintenir ou augmenter les rendements, les agriculteurs ont besoin de faire de plus en plus appel à de nombreux agents actifs, à l'encontre des différents parasites ou micro-organismes susceptibles d'attaquer les plantes.

Pour répondre à cette demande, les chercheurs ont découvert des agents insecticides, acaricides, fongicides, herbicides et autres, qui sont devenus indispensables de nos jours en agriculture moderne.

C'est ainsi que la firme ROHM & HAAS a breveté en 1961 des fongicides qui sont des produits complexes de coordination de métaux polyvalents avec l'éthylène-bis(dithiocarbamate) de manganèse (brevet français N° 1 326 689).

L'un de ces produits, connu sous la dénomination de "Mancozèbe" est un anticryptogamique, qui, par suite de sa grande efficacité et de sa sélectivité, a trouvé et trouve encore de nos jours un grand succès pour le traitement de nombreuses cultures, tant fruitières que maraîchères et potagères.

Il est utilisé couramment en France pour le traitement contre les champignons parasites des cultures comme la betterave, la pomme de terre, la vigne, les céréales, les arbres fruitiers et les cultures légumières.

Toutefois l'utilisation de doses suffisamment élevées de ces produits fongicides pour qu'elles soient efficaces est limitée par leur phytotoxicité sur les cultures qu'ils sont chargés de protéger.

Il y a donc à la fois un besoin de compositions toujours plus efficaces du point de vue fongicide mais qui, en même temps ne fasse subir aucun dommage aux plantes attaquées par les champignons.

Pour essayer de remédier à ces besoins contradictoires, on a eu recours à l'alternance de l'emploi d'agents fongicides agissant par des voies différentes, notamment des fongicides systémiques et des fongicides de contact.

On a également fait appel à de nouvelles formulations de fongicides de contact, qui n'induisent pas de phénomène de résistance et sont plus efficaces sur le plan biologique.

Ces différentes solutions n'ont pas eu le succès escompté car elles se sont révélées trop coûteuses ou trop lourdes à mettre en oeuvre sur le plan pratique.

La présente invention a pour objet une nouvelle formulation permettant de surmonter ces inconvénients.

La Demanderesse a en effet découvert que des compositions contenant un produit complexe de coordination d'un métal polyvalent avec l'éthylène-bis(dithiocarbamate) de manganèse avaient des propriétés fongicides nettement améliorées par addition à ce produit actif, connu pour ses propriétés fongicides, d'une huile minérale de pétrole, dans une proportion relative de 20 à 100% en poids par rapport au poids de ce produit complexe de coordination dans la composition.

L'amélioration obtenue des propriétés fongicides d'une telle composition est de l'ordre de 20 % à 30 % à teneur égale en produit complexe de coordination, ce qui est particulièrement important sur le plan économique, étant donné la différence de prix de revient entre ce produit et l'huile minérale de pétrole.

Cette découverte est d'autant plus surprenante que l'huile minérale de pétrole ne présente pas de propriétés fongicides en elle-même mais un simple pouvoir fongistatique sur certaines souches de champignons parasites comme la cercosporiose du bananier.

La présente invention est donc basée sur la découverte de la synergie obtenue en combinant dans une même formulation antifongique le produit complexe de coordination d'un métal polyvalent avec une huile minérale de pétrole.

Les produits complexes de coordination d'un métal polyvalent avec l'éthylène-bis-(dithiocarbamate) de manganèse, entrant dans les compositions selon l'invention, sont des produits connus en soi, décrits notamment dans le brevet français N° 1 326 689 précité, dans lesquels le métal polyvalent qui est autre que le manganèse, est choisi parmi le zinc, le cuivre, le fer et le cobalt et est de préférence le zinc.

Le plus connu d'entre eux, qui est utilisé commercialement à grande échelle, est le produit complexe de coordination avec le zinc, connu sous le nom de "Mancozèbe".

La Demanderesse a découvert que le "Mancozèbe" peut être utilisé dans toutes les applications fongicides où il est couramment employé à des doses inférieures lorsqu'il est combiné, selon l'invention, à de l'huile minérale de pétrole dans les proportions relatives de 20 à 100 % de la seconde par rapport au premier.

L'huile minérale de pétrole à utiliser dans les compositions de l'invention est une huile présentant les caractéristiques suivantes :
- densité à 15°C : 0,890 et de préférence 0,860 maximum (NFT 60-101) ;

- viscosité cinématique à 40°C : entre 9 et 33 mPa/s. et de préférence entre 13 et 16 mPa/s. (NFT 60-100) ;
- inflammabilité AFNOR : 180°C minimum (NFT 60-103) ;
- point d'écoulement : -15°C maximum (NFT 60-105) ;
- indice de sulfonation : 70 et de préférence 92 minimum (PNU-43 216) ;
- teneur en soufre : 0,3 % en poids maximum (NFT 60-142) ;
- et indice d'iode : 0,02 mg de KOH par g maximum (NFT 60-108) ;

Les compositions conformes à l'invention comprennent entre 15 et 60 % en poids du produit complexe de coordination, entre 7,5 et 60 % en poids d'huile minérale de pétrole, ces deux ingrédients étant présents dans les proportions relatives indiquées précédemment et étant dispersés dans 20 à 55 % en poids d'eau grâce à des agents mouillants et autres facilitant leur dispersion.

L'addition de l'eau, dans les proportions indiquées, aux deux matières actives que sont le produit complexe de coordination et l'huile minérale dans les compositions selon l'invention, permet d'une part d'améliorer leur conservation dans le temps, les différents ingrédients n'ayant pas tendance à se séparer, et d'autre part d'éviter tout problème de phytotoxicité sur les cultures à protéger du fait des proportions relatives élevées de l'huile minérale de pétrole par rapport au produit complexe de coordination.

La formulation des compositions fongicides selon l'invention dépend de leur utilisation finale sous forme d'une dispersion aqueuse ou huileuse.

Une mise en oeuvre préférée sous forme d'une formulation dispersable dans l'eau et particulièrement utile pour un traitement de pulvérisation des cultures à protéger par voie terrestre est indiquée sur le tableau I.

| Tableau I<br>Formulation dispersable dans l'eau | |
|---|---|
| Constituant | % en poids |
| Mancozèbe technique à 85 % de matière active | 33,00 |
| Huile minérale de pétrole | 18,00 |
| Emulgateur | 4,00 |
| Agents mouillants/dispersants | 3,00 |
| Epaississant | 0,20 |
| Antimousse | 0,20 |
| Eau | 41,60 |

Une autre mise en oeuvre sous forme d'une formulation dispersable dans l'huile et mieux adaptée au traitement aérien des cultures à protéger (pulvérisation à bas volume où l'huile est utilisée comme support à la place de l'eau), comme le bananier par exemple figure au tableau II.

EP 0 435 760 B1

| Tableau II Formulation dispersable dans l'huile | |
|---|---|
| Constituant | % en poids |
| Mancozèbe technique à 85 % de matière active | 35,1 |
| Huile de pétrole | 30,0 |
| Emulgateur | 7,0 |
| Epaississants | 5,0 |
| Eau | 22,9 |

Les compositions selon l'invention sont |efficaces pour lutter contre les champignons qui attaquent tant les cultures de type céréales que les cultures potagères ou fruitières.

Elles se sont révélées particulièrement intéressantes pour le traitement du mildiou de la vigne, de la septoriose du blé et du maïs et la cercosporiose du bananier.

Les compositions selon l'invention ont été testées pour leur efficacité aussi bien en serre qu'en plein champ et ont donné des résultats particulièrement prometteurs, comme le montrent les exemples suivants qui n'ont qu'un but purement illustratif.

Exemple 1

Une expérimentation biologique préalable en serre a été effectuée avec la formulation dispersable dans l'eau figurant au tableau I pour vérifier sa sélectivité sur la culture suivante :
- pois protéagineux (variété Starlette) ;
- blé tendre d'hiver (variété Talent) ;
- et betterave sucrière (variété Aramis) .

La méthode expérimentale suivie au cours de ces essais consiste à disposer tout d'abord les graines dans des pots de matière plastique de dimensions 10x10x10 cm remplis de terre stérilisée, à raison de 9 graines par pot pour les pois protéagineux et de 12 graines par pot pour le blé tendre d'hiver et la betterave sucrière.

Le traitement par la formulation selon l'invention a été effectuée au stade 2 à 6 feuilles pour les pois protéagineux, au stade 3 feuilles pour le blé tendre d'hiver et au stade 2 à 4 feuilles pour la betterave sucrière.

Il consiste à appliquer un volume correspondant à 1 000 litres par hectare de la formulation selon l'invention à des doses diluées à l'eau, correspondant respectivement à 8 000 ou 16 000 grammes de Mancozèbe à l'hectare, c'est-à-dire 4 ou 8 fois la dose moyenne normale homologuée pour des compositions conventionnelles comprenant le Mancozèbe comme seule matière active.

Les expérimentations ont porté sur des parcelles subdivisées avec six essais identiques et témoins non traités.

On a procédé à une notation journalière des phénomènes de phytotoxicité éventuelle et on a récolté et pesé à sec les plantes des pots traités et des pots témoins au bout d'un mois, c'est-à-dire lorsque l'effet des traitements effectués était maximal.

4

Les résultats des pesées ainsi effectuées figurent sur le tableau III ci-dessous.

## Tableau III

## Poids de matière sèche en grammes par pot

|  | Essai sur pois pro- téagineux | Essai sur blé tendre d'hiver | Essai sur betterave sucrière |
|---|---|---|---|
| Témoin non traité | 2,236 | 2,225 | 1,887 |
| Pot traité (moyenne toutes doses confondues) | 2,268 | 2,217 | 1,836 |

L'interprétation statistique de ces expérimentations et les résultats figurant sur le tableau III montrent qu'il n'y a aucune différence significative entre les plantes témoin non traitées et les plantes traitées par la formulation selon l'invention à des doses de Mancozèbe correspondant à 4 fois et 8 fois la dose moyenne homologuée, à savoir 2 000 grammes à l'hectare, ce qui démontre la parfaite sélectivité de la formulation ainsi expérimentée.

Exemple 2

Une expérimentation biologique en plein champ a été réalisée sur vigne pour lutter contre le mildiou de mai à août 1988 à la station de COUHINS de l'Institut National de la Recherche Agricole (INRA) dans la région de Bordeaux et sous le contrôle de cet Institut.

Les parcelles affectées à cette expérimentation étaient placées sous brumisation et contaminées artificiellement avec des souches de mildiou résistant aux fongicides de la famille des anilides.

Le protocole expérimental était le suivant :

Cinq lots de deux parcelles chacun de plants de Cabernet-Sauvignon ont été infestés par du mildiou successivement le 13 juin, lorsque les plants étaient en feuilles, puis le 22 juin, la demi-floraison ayant eu lieu vers le 28 juin et enfin le 5 juillet 1988, alors que les grains de raisin étaient apparus.

Le premier lot qui sert de témoin n'a subi aucun traitement de protection et tous les autres lots ont subi sept traitements fongicides successifs à 14 jours d'intervalle à compter du 31 mai 1988, à savoir les 31 mai, 14 et 28 juin, 12 et 26 juillet, 9 et 23 août 1988.

Le second lot qui sert à un essai comparatif était traité à chaque passage par un même volume correspondant à 1000 l/ha de solution de Mancozèbe du commerce à la dose homologuée de 2800 g/ha de Mancozèbe selon la formulation DITHANE M45 (marque enregistrée de la Société ROHM & HAAS).

Les trois derniers lots ont été traités selon l'invention à chaque passage par le même volume correspondant à 1000 l/ha de formulation figurant sur le tableau I et identifiée par PW 8756 à une dose diluée dans l'eau correspondant, respectivement, à 2500, 2400 et 2000 g/ha de Mancozèbe.

5

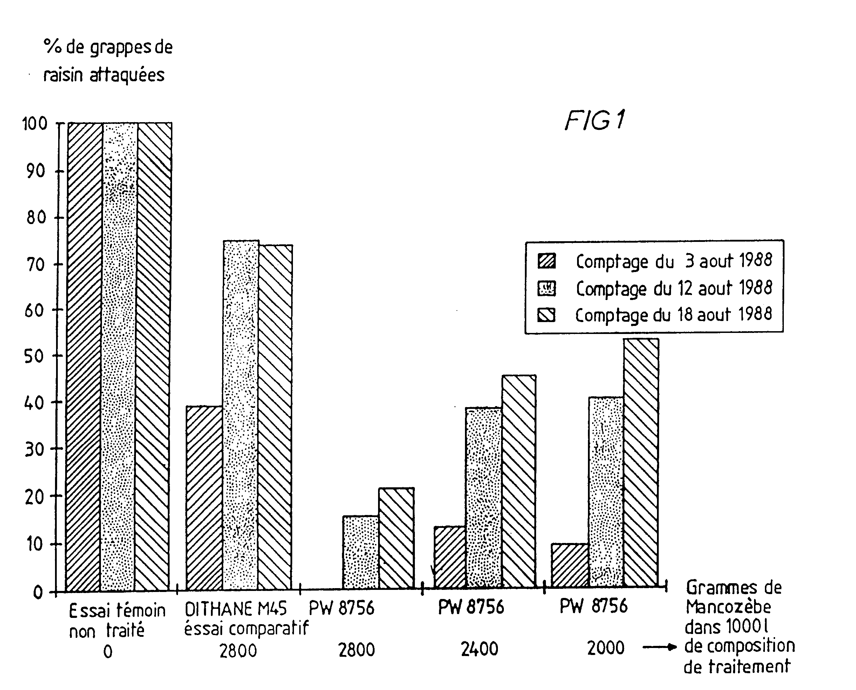

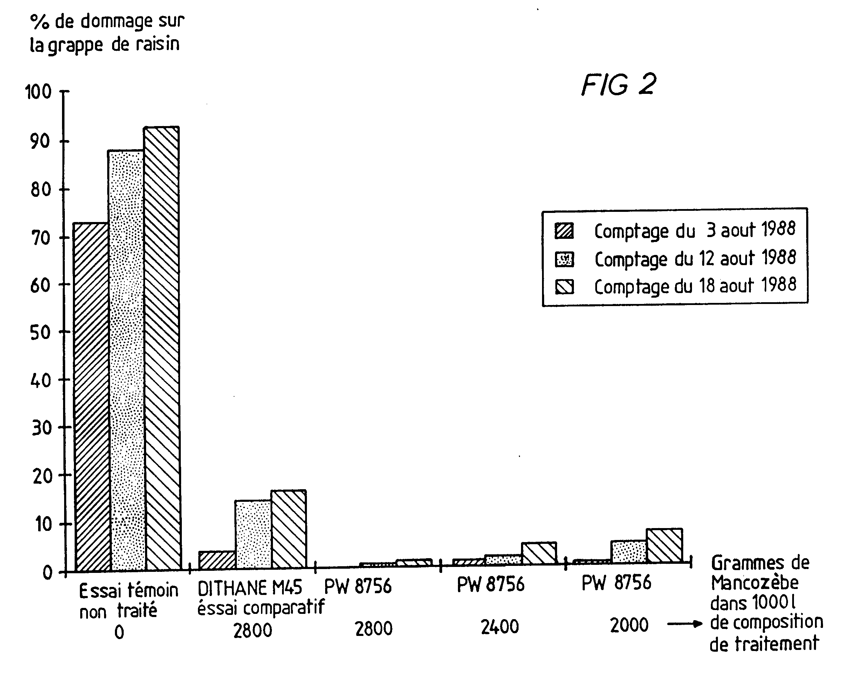

Les résultats obtenus figurent sur le tableau IV et les figures 1 et 2 ci-jointes.

Tableau IV
Essai en plein champ contre le mildiou sur vigne

| Comptage effectué le | 3.8.1988 | | 12.8.88 | | 18.8.88 | |
|---|---|---|---|---|---|---|
| | % dommage | classe | % dommage | classe | % dommage | classe |
| Lot N° 1 (témoin non traité) | 73,30 100,00 | | 88,09 100,00 | A | 93,00 100,00 | A A |
| Lot N° 2 (Mancozèbe seul) à 2800 g/ha (essai comparatif) | 3,72 39,53 | | 14,57 75,05 | B | 16,58 73,80 | B B |
| Lot N° 3 avec 2800 g/ha de Mancozèbe + huile minérale | 0,00 0,00 | | 0,56 15,75 | D | 1,18 21,70 | FG E |
| Lot N° 4 avec 2400 g/ha de Mancozèbe + huile minérale | 1,29 13,25 | | 1,91 38,61 | CD | 4,90 45,46 | CDE BCD |
| Lot N° 5 avec 2000 g/ha de Mancozèbe + huile minérale | 0,42 9,25 | | 4,69 40,74 | CD | 7,19 53,14 | CD BC |

Le tableau IV montre les comptages effectués respectivement les 3, 12 et 18 août 1988 sur chacune des deux parcelles des cinq lots utilisés pour l'expérimentation. Les résultats sont exprimés en pourcentages des dommages visibles sur les plants de vigne infestés et classifiés selon des classes allant de la classe A où les résultats sont les plus mauvais à la classe G où ils sont les meilleurs.

Les figures 1 et 2 indiquent respectivement les pourcentages de raisins attaqués et les pourcentages de dommages causés aux grappes de raisin en fonction des quantités de Mancozèbe présentes dans les formulations utilisées et à chacun des trois comptages effectués au cours de l'expérimentation effectuée comme décrit ci-dessus.

Il résulte de cette expérimentation en plein champ, conduite dans des conditions particulièrement draconiennes puisque l'essai témoin montre que plus de 70 % des grappes de raisin non traitées étaient détruites, que la composition selon l'invention est plus efficace à des doses de 2800 g/ha, de 2400 g/ha et même de 2000 g/ha de Mancozèbe que la composition classique de Mancozèbe seul, utilisée à raison de 2800 g/ha.

Par conséquent, pour un volume de bouillie identique de 1000 l/ha, on peut obtenir, avec les compositions selon l'invention, la même protection avec une quantité de Mancozèbe réduite de 28,5 % que celle obtenue avec des compositions conventionnelles comprenant du Mancozèbe comme seul produit actif.

Ce résultat est d'autant plus intéressant qu'il ne donne lieu à aucun phénomène de phytotoxicité tant sur les feuilles que sur les grappes de raisin ou la vigne.

Exemple 3

Des expérimentations biologiques de sélectivité en serre et d'efficacité en plein champ ont été effectuées avec la formulation dispersable dans l'huile du tableau II pour lutter contre la cercosporiose du bananier.

Expérimentation de sélectivité en serre

A la suite de la découverte en 1953 du caractère fongistatique de certaines huiles de pétrole sur la cercosporiose du bananier, lors de travaux effectués par l'Institut de Recherche sur Fruits et Agrumes à la Martinique, sous la conduite de M. CUILLE, ce dernier a mis au point un essai de sélectivité de fongicide sur maïs en serre qui est extrapolable au bananier.

L'expérimentation a été faite selon ce modèle dans les conditions suivantes :

Neuf graines de maïs de la variété DEA ont été semées dans des pots de 12 x 12 x 12 cm remplies de terre stérilisée.

Trois traitements successifs avec la formulation de l'invention ont été effectués, le premier au stade de 3 à 5 feuilles de maïs, le deuxième 7 jours après et le troisième, 14 jours après le premier traitement.

Chacun de ces traitements a été effectué à deux doses expérimentales différentes.

Dans une première série d'essais, les trois traitements successifs ont été effectués avec la formulation dispersable dans l'huile du tableau II, qui contient 330 grammes par litre de Mancozèbe et 330 grammes par litre d'huile de pétrole (SPRAYBAN N° 3 de la société PENNWALT FRANCE), diluée dans de l'huile SPRAYTEX CT utilisée conventionnellement comme support de fongicides pour traitements aériens, dans la proportion de 6,06 litres de formulation pour 17,7 litres d'huile SPRAYTEX CT de façon que les doses correspondantes à l'hectare soient de 2 000 grammes de Mancozèbe et 2 000 grammes de SPRAYBAN N° 3.

Dans une deuxième série d'essais, les trois traitements successifs ont été effectués avec la même formulation dispersable dans l'huile du tableau II, dilué dans la même huile SPRAYTEX CT de façon à correspondre à une dose double de la précédente, soit 4 000 grammes de Mancozèbe et 4 000 grammes d'huile SPRAYBAN N° 3 à l'hectare.

Ces deux séries d'essais ont été conduites par pulvérisation des pots avec un appareil TECNOMA T1 U.B.V. permettant des pulvérisations à très faible volume, sur des parcelles subdivisées avec six essais identiques et témoins non traités.

On a ensuite procédé à une notation des phénomènes de phytotoxicité, dix jours après le troisième traitement et on a récolté et pesé les feuilles de maïs de chaque pot.

Les résultats montrent que, même avec un effet cumulatif des trois traitements successifs, à l'une ou l'autre dose, aucun symptôme de phytotoxicité sur les feuilles de maïs n'a été constaté, ce qui prouve la parfaite sélectivité de la formulation mise au point.

Expérimentation d'efficacité en plein champ

Cette expérimention sous forme de micro-test a été réalisée en plein champ au Costa-Rica (Finca Ombi) sur des bananiers de la variété Valéry, infestés naturellement par du Yellow Sigatoka (Mycosphaerella Musicola).

Une parcelle d'essai est constituée par un bananier, sur chaque nouvelle feuille duquel on effectue un traitement limité à une surface carrée de 10 X 10 cm, encadrée par deux surfaces rectangulaires de 5 X 10 cm non traitées de la même feuille.

a) Une première série d'essais a été commencée en décembre 1988 pendant un mois et demi avec quatre traitements successifs à une époque où ont lieu des pluies très importantes.

Le traitement consistait en une micro-pulvérisation effectuée sur les toutes premières feuilles du bananier au fur et à mesure de leur apparition par déroulement du cigare de formation de la feuille, et il a été renouvelé tous les 7 jours sur les surfaces carrées des feuilles déjà traitées, jusqu'à la fin de l'essai.

On a utilisé pour ces traitements la formulation dispersable dans l'huile du tableau II, contenant 330 grammes par litre de Mancozèbe et 330 grammes par litre de SPRAYBAN N° 3, et qui a été diluée dans 20 litres d'une huile SPRAYTEX CT, utilisée conventionnellement comme support de fongicides pour traitements aériens, dans des proportions correspondant aux doses suivantes par hectare de Mancozèbe :

- dose 1 : 2 150 grammes,
- dose 2 : 1 935 grammes,
- dose 3 : 1 720 grammes,
- dose 4 : 1 505 grammes,
- dose 5 : 1 290 grammes.

Dans les mêmes conditions, une formulation conventionnelle de Mancozèbe en poudre à 85 % de matière active a été diluée dans de l'eau pour former un volume de bouillie de 89 litres par hectare et a été

7

expérimentée aux mêmes doses de matière active par hectare (doses 1 à 5).

L'efficacité du traitement a été contrôlée par observation visuelle des surfaces nécrosées de la feuille selon les normes expérimentales retenues par les techniciens pour ce type d'essai.

Ces observations ont été réalisées tous les quinze jours, soit trois observations au total.

Après interprétation statistique (test DUNCAN 0,05), l'efficacité fongicide relevée au dernier contrôle, réalisé le 3 janvier 1989 a été la suivante :
- pour la formulation selon l'invention, toutes doses (1 à 5) confondues : 93 % ;
- pour la formulation conventionnelle comprenant du Mancozèbe comme seule matière active sous forme pulvérulente mouillable : 0 %.

Le résultat de cette première série d'essais en plein champ confirme bien le résultat déjà connu que le Mancozèbe dans sa formulation conventionnelle en poudre ne peut assurer une protection fongicide valable contre la cercosporiose du bananier, même à la dose recommandée de 2 000 grammes à l'hectare.

Le mauvais résultat obtenu avec cette formulation conventionnelle est dû principalement, d'une part au lessivage rapide par les pluies qui avaient été particulièrement abondantes au cours de l'expérimentation et, d'autre part, à une répartition médiocre sur les faces inférieures des feuilles.

Par contre, la nouvelle formulation selon la présente invention permet de pallier ces inconvénients, grâce à l'incorporation du Mancozèbe dans une huile de pétrole qui, outre son action fongistatique sur le pathogène, assure une bonne pénétration du Mancozèbe dans les tissus de la feuille du bananier, en évitant ainsi le lessivage par les pluies survenues après chaque traitement et permettant ainsi de protéger les faces inférieures des feuilles.

b) Compte tenu des résultats exceptionnels d'efficacité fongicide obtenus au cours de cette première série d'essais avec la formulation selon la présente invention, on a effectué du 15 janvier au 15 février 1989 une seconde série d'essais dans des conditions climatiques toujours aussi défavorables, dues à des pluies importantes.

En utilisant les mêmes données expérimentales que pour la première série d'essais, on a simplement, au cours de cette deuxième série d'essais, retardé le premier traitement de 5 jours après le déroulement des premières feuilles du bananier pour augmenter la sévérité du test.

A la fin de cette deuxième série d'essais, les résultats de l'efficacité fongicide obtenue ont été les suivants :
- pour la formulation selon l'invention, toutes doses (1 à 5) confondues : 97 % ;
- et pour la formulation conventionnelle comprenant du Mancozèbe comme seule matière active sous forme pulvérulente mouillable : 0 %.

Les résultats de cette seconde série d'essais mettent bien en lumière la synergie d'efficacité fongicide de la formulation selon l'invention, due à la combinaison du Mancozèbe et d'une huile de pétrole, puisque le contrôle de la cercosporiose est toujours obtenu, malgré le décalage dans le temps (5 jours) du début de traitement, qui avait pour but de laisser aux champignons parasitaires un délai supplémentaire pour se développer.

La formulation selon l'invention permet donc de réaliser à l'intérieur de la feuille du bananier une migration du Mancozèbe qui transforme ce dernier de fongicide de contact en véritable fongicide systémique.

Une telle transformation présente une importance considérable tant sur le plan pratique que d'un simple point de vue économique.

**Revendications**

**1.** Composition fongicide contenant un produit complexe de coordination d'un métal polyvalent avec l'éthylène-bis(dithiocarbamate) de manganèse, dans lequel le métal polyvalent du produit complexe de coordination est un métal autre que le manganèse choisi parmi le zinc, le cuivre, le fer et le cobalt et est en particulier le zinc, caractérisée en ce qu'elle contient entre 15 et 60 % en poids du produit complexe de coordination, entre 7,5 et 60 % en poids d'huile minérale de pétrole, présentant les caractéristiques suivantes :
- densité à 15°C : 0,890 et de préférence 0,860 maximum (NFT 60-101) ;
- viscosité cinématique à 40°C : entre 9 et 33 et de préférence entre 13 et 16 mm$^2$/s (NFT 60-100) ;
- inflammabilité AFNOR : 180°C minimum (NFT 60-103) ;
- point d'écoulement : -15°C maximum (NFT 60-105) ;
- indice de sulfonation : 70 et de préférence 92 minimum (PNU 43.216) ;
- teneur en soufre : 0,3 % en poids maximum (NFT 60-142) ;

- et indice d'iode : 0,02 mg de KOH par g maximum (NFT 60-108),
et en ce que cette huile minérale de pétrole est dispersée dans 20 à 55 % en poids d'eau grâce à des agents mouillants convenables.

2. Composition dispersable dans l'eau selon la revendication 1, caractérisée en ce qu'elle contient environ 330 grammes de Mancozèbe technique à 85 % de matière active, 180 grammes d'huile minérale de pétrole et 416 grammes d'eau par litre, le reste de la composition étant formé d'agents facilitant la dispersion dans l'eau.

3. Composition dispersable dans l'huile selon la revendication 1, caractérisée en ce qu'elle contient environ 351 grammes de Mancozèbe technique à 85 % de matière active, 300 g d'huile minérale de pétrole et 229 grammes d'eau par litre, le reste étant formé d'agents facilitant la dispersion dans l'huile.

4. Application de la composition selon l'une quelconque des revendications précédentes au traitement des cultures contre les champignons.

5. Application selon la revendication 4 au traitement de la vigne, en particulier contre le mildiou.

6. Application selon la revendication 4 au traitement des céréales, en particulier le blé et le maïs contre la septoriose.

7. Application selon la revendication 4 au traitement des bananiers contre la cercosporiose.

## Claims

1. Fungicide composition containing a coordination complex product of a polyvalent metal with manganese ethylenebis(dithiocarbamate), in which the polyvalent metal of the complex coordination product is a metal other than manganese, chosen from zinc, copper, iron and cobalt and is in particular zinc, characterized in that it contains between 15 and 60% by weight of the coordination complex product, between 7.5 and 60% by weight of petroleum mineral oil, having the following characteristics:
   - density at 15°C: 0.890 and preferably 0.860 maximum (NFT 60-101);
   - kinematic viscosity at 40°C: between 9 and 33 and preferably between 13 and 16 mm$^2$/s (NFT 60-100);
   - AFNOR inflammability: 180°C minimum (NFT 60-103);
   - pour point: -15°C maximum (NFT 60-105);
   - sulphonation number: 70 and preferably 92 minimum (PNU 43.216);
   - sulphur content: 0.3% by weight maximum (NFT 60-142);
   - and iodine number: 0.02 mg of KOH per g maximum (NFT 60-108);
   and in that this petroleum mineral oil is dispersed in 20 to 55% by weight of water with the help of suitable wetting agents.

2. Composition dispersible in water according to claim 1, characterized in that it contains about 330 grams of technical Mancozeb with 85% of active ingredient, 180 grams of petroleum mineral oil and 416 grams of water per litre, the remainder of the composition being formed by agents which facilitate the dispersion in water.

3. Composition dispersible in oil according to claim 1, characterized in that it contains about 351 grams of technical Mancozeb with 85% of active ingredient, 300 g of petroleum mineral oil and 229 grams of water per litre, the remainder being formed by agents which facilitate the dispersion in oil.

4. Use of the composition according to any one of the preceding claims for the treatment of crops against fungi.

5. Use according to claim 4 for the treatment of vines, in particular against mildew.

6. Use according to claim 4 for the treatment of cereals, in particular wheat and maize, against septoria.

7. Use according to claim 4 for the treatment of banana trees against cercosporiosis.

**Patentansprüche**

1.  Fungizide Zusammensetzung, die ein komplexes Koordinationsprodukt eines mehrwertigen Metalles mit dem Ethylen-bis-(dithiocarbamat) von Mangan enthält, in welcher das mehrwertige Metall des komplexen Koordinationsproduktes ein von Mangan verschiedenes Metall, ausgewählt unter Zink, Kupfer, Eisen und Kobalt, und insbesondere Zink ist, dadurch gekennzeichnet, daß sie enthält: zwischen 15 und 60 Gew.-% des komplexen Koordinationsproduktes, zwischen 7,5 und 60 Gew.-% Erdölmineralöl, das die folgenden Eigenschaften aufweist:
    - Dichte bei 15°C: höchstens 0,890 und vorzugsweise 0,860 (NFT 60-101),
    - kinematische Viskosität bei 40°C: zwischen 9 und 33 und vorzugsweise zwischen 13 und 16 mm$^2$/s (NFT 60-100),
    - Entflammbarkeit AFNOR: mindestens 180°C (NFT 60-103),
    - Fließpunkt: höchstens -15°C (NFT 60-105),
    - Sulfonierungszahl: mindestens 70 und vorzugsweise 92 (PNU 43.216),
    - Schwefelgehalt: höchstens 0,3 Gew.-% (NFT 60-142),
    - Jodzahl: höchstens 0,02 mg KOH pro g (NFT 60-108),
    und daß dieses Erdölmineralöl mittels geeigneter Netzmittel in 20 bis 55 Gew.-% Wasser dispergiert ist.

2.  In Wasser dispergierbare Zusammensetzung nach Anspruch 1, dadurch gekennzeichnet, daß sie etwa 330 g technisches Mancozeb mit 85 % Aktivstoff, 180 g Erdölmineralöl und 416 g Wasser pro l enthält, wobei der Rest der Zusammensetzung durch Mittel gebildet wird, die die Dispersion in Wasser erleichtern.

3.  In Öl dispergierbare Zusammensetzung nach Anspruch 1, dadurch gekennzeichnet, daß sie etwa 351 g technisches Mancozeb mit 85 % Aktivstoff, 300 g Erdölmineralöl und 229 g Wasser pro l enthält, wobei der Rest durch Mittel gebildet wird, die die Dispersion in Öl erleichtern.

4.  Verwendung der Zusammensetzung nach irgendeinem der vorhergehenden Ansprüche zur Behandlung von Kulturen gegen Pilzbefall.

5.  Verwendung nach Anspruch 4 zur Behandlung von Reben, insbesondere gegen Mehltau.

6.  Verwendung nach Anspruch 4 zur Behandlung von Getreiden, insbesondere von Weizen und Mais, gegen Blattfleckenkrankheit (Septoriose).

7.  Verwendung nach Anspruch 4 zur Behandlung von Bananenstauden gegen Cercosporiose.

FIG1

FIG 2

% de dommage sur la grappe de raisin

Légende:
- Comptage du 3 aout 1988
- Comptage du 12 aout 1988
- Comptage du 18 aout 1988

Axe des abscisses (Grammes de Mancozèbe dans 100 l de composition de traitement):
- Essai témoin non traité — 0
- DITHANE M45 éssai comparatif — 2800
- PW 8756 — 2800
- PW 8756 — 2400
- PW 8756 — 2000

EP 0 435 760 B1